# EUROPEAN PATENT APPLICATION

(11) **EP 1 514 842 A1**
(43) Date of publication of application: **16.03.2005**
(21) Application number: 04255218.2
(22) Date of filing: 27.08.2004
(51) Int. Cl.: C01B 33/38, C08K 3/00, C08K 3/34, C08K 9/08, C09C 1/42, C09C 3/10

(54) **Nanoclay modified waterborne compositions for coating plastic and methods for making the same**

(30) Priority: 12.09.2003 US 502604 P
(71) Applicant: Rohm and Haas Company, Philadelphia, Pennsylvania 19106-2399 (US)
(72) Inventor: Finch, William C., Blue Bell Pennsylvania 19422 (US); Jackson, Michael L., La Grange Illinois 60525 (US); Lorah, Dennis P., Lansdale Pennsylvania 19446 (US); Marsh, Darren R., Chicago Illinois 60610 (US); Rybarczyk, David B., Schereville Indiana 46375 (US); Stubbs, Frank A., Dyer Indiana 46311 (US)
(74) Representative: Kent, Venetia Katherine

(57) **Abstract**

The present invention provides aqueous dispersion compositions comprising one or more than one of each of aqueous dispersions of water-dispersible polymers and aqueous nanocomposite dispersions of at least partially exfoliated layered silicates and water-insoluble polymers to enhance the thermal shock resistance of a waterborne coating, film, or article comprising the composition. Only 2 to 10 phr of the layered silicate, e.g. sodium montmorillonite surprisingly enhances thermal shock resistance. Optional fillers, such as nepheline syenite, may be added. Such compositions may be coated on automotive plastic, TPO or resinous substrates, and provide coatings having a 19 or greater thermal shock resistance according to Ford laboratory test method BI 107-05 when coated on TPO and baked for 15 minutes at from 74 to 90°C. Further, the present invention provides methods of making aqueous nanocomposite dispersions comprising mixing unmodified layered silicate and water insoluble neat resin in water to at least partially exfoliate the clay and subjecting the resulting mixture to high shear.

## Description

### FIELD OF THE INVENTION

The present invention relates to aqueous polymer or resin compositions comprising aqueous nanocomposite dispersions and methods of making such nanocomposite dispersions. More specifically, the present invention relates to waterborne coatings for thermoplastic polyolefins (TPO), plastic substrates, other resinous substrates, e.g. automotive interior parts, wood, metal, leather, asphalt, textiles, paper, paperboard, or cementitious materials that comprise aqueous nanocomposite dispersions of one or more than one of each of an at least partially exfoliated layered silicate or clay and a water insoluble polymer, and relates to methods of making the same.

### BACKGROUND OF THE INVENTION

Because of the low cost, light weight, good impact resistance, ease of molding and recyclability of polyolefins, such as polypropylene and polypropylene containing compounds modified with rubber, also known as thermoplastic polyolefins (TPO), their use has grown significantly in areas such as the automotive market since the 1970's. They have been used in interior applications, such as airbag covers, and exterior applications, such as fascia and trim. Coatings have been applied to these polyolefins and TPO substrates in attempts to improve the weatherability, hardness, color and appearance of these substrates. Coating compositions designed to improve adhesion to untreated TPO, and untreated polypropylene substrates have comprised chlorinated polyolefins (CPO) which are often dissolved into aromatic solvents or other volatile organic compounds (VOC's).

U.S. Patent 5,777,022 to Bugajski et al. shows waterborne coatings containing CPO aqueous dispersions for direct adhesion to untreated TPO. Such waterborne coatings have a low VOC content, however the thermal shock performance of these coatings when baked at temperatures less than 180°F (82.2°C) is inadequate for automotive use. Further, the use of chlorinated polymers like CPO presents health and safety concerns throughout manufacture, use and disposal.

A stable and quickly produced aqueous composition which exhibits improved thermal shock resistance when cured at low temperatures would greatly limit the use of VOCs and the use of solvents in aqueous coatings, film-forming compositions, adhesives, paints, sealants, binders and sizing agents, or caulks for heat-sensitive or plastic substrates, and in making plastics additives or shaped articles. Further, an aqueous composition which exhibits improved thermal shock resistance properties and comprises reduced amounts of CPO or no CPO would limit the environmental damage caused by use of chlorinated compounds.

### SUMMARY OF THE INVENTION

The present invention provides aqueous or waterborne dispersion compositions which comprise one or more than one of each of an aqueous dispersion or emulsion of a water-dispersible polymer, an aqueous nanocomposite dispersion of a water-insoluble adhesion promoting polymer and a layered silicate, and a filler to enhance thermal shock resistance of a coating, film, or article formed from or comprising the composition. Useful layered silicates may be any that exfoliate in water, i.e. the layers disperse individually on a nanoscale, such as untreated sodium montmorillonite, or other untreated phyllosilicates. Suitable fillers may be chosen from nepheline syenite, hydrotalcite, mica, wollastonite, talc, calcium metasilicate, calcium carbonate, titanium dioxide, iron oxide, zinc oxide, magnesium silicate, chopped glass fibers, and clays other than layered silicates that exfoliate in water.

In a specific embodiment, the compositions provide waterborne coatings or film-forming compositions for use on automotive plastic substrates. A suitable coating polymer may be an acrylic resin latex having a glass transition temperature (Tg) of 10°C or greater, optionally having carboxylic acid functionality so as to provide an acid number of from 0 to 250, hydroxyl functionality so as to provide an hydroxyl number of from 0 to 250, amine functionality, glycidyl functionality, or mixtures and combinations thereof. The combination and amounts used of the one or more than one of each of the filler and the nanodispersed nanoclay particles are effective to provide a coating composition that exhibits a 19 or greater thermal shock resistance according to Ford laboratory test method BI 107-05 when coated on TPO and baked for 15 minutes at a temperature of from 165°F (74°C) to 180°F (83°C).

The present invention also provides methods of making aqueous nanocomposite dispersions for use in aqueous or waterborne coatings, paints, sealants, thermosets, textiles, textile binders, caulks, adhesives, and plastics additives, comprising mixing unmodified layered silicate or clay and water-insoluble polymer or resin, optionally dissolved in organic solvent, in water to at least partially exfoliate the clay and subjecting the mixture to high shear. Any water insoluble resin may be used, and may, for example, be chosen from one or more than one of a water-insoluble adhesion promoting polymer, an acrylic, vinyl or styrene polymer, and mixtures thereof. If organic solvent is used to dissolve the water-insoluble polymer or resin, it may be optionally removed after the aqueous nanocomposite dispersion is formed. Various orders of addition are included. For example, the resin and the layered silicate could be dispersed together in water, they could be dispersed separately in water and blended under high shear, or one could be dispersed and the other could be dispersed in the already dispersed component. The aqueous nanocomposite dispersions may simply be mixed with aqueous dispersions of water-dispersible polymers to form aqueous dispersions for use in coatings, paints, sealants, thermosets, textiles, textile binders, caulks, adhesives, and plastics additives, followed, if desired, by dewatering and drying. The aqueous nanocomposite dispersions may be also used as seeds upon which additional polymer can be formed via emulsion polymerization techniques forming aqueous dispersions or use in coatings, paints, sealants, thermosets, textiles, textile binders, caulks, adhesives, and plastics additives, followed, if desired, by dewatering and drying.

Alternatively, waterborne coatings for automotive plastic substrates may comprise mixtures of filler and aqueous dispersions or emulsions of water dispersible polymers mixed with aqueous nanocomposite dispersions of at least partially hydrophobically modified layered silicates, wherein the nanocomposite dispersions may be made by at least partially exfoliating them in an aqueous solvent suspension or in a solvent suspension including a water-insoluble adhesion promoting polymer, combining the suspension with water and inverting under high shear to form an oil-in-water mixture from which solvent may optionally be removed to form an aqueous nanocomposite dispersion. If no water-insoluble adhesion promoting polymer is present during exfoliation, it may be added prior to or during high shear.

### DETAILED DESCRIPTION OF THE INVENTION

In accordance with the present invention, aqueous compositions for coatings that, when baked at from 74 to 83°C or higher for a period from 10 to 60 minutes, exhibit excellent thermal shock resistance comprise aqueous nanocomposites of a water-insoluble polymeric adhesion promoter. In addition, aqueous compositions for use as paints, sealants, thermosets, textiles, textile binders, caulks, adhesives, and as plastics additives exhibiting improved toughness, improved barrier properties, or improved resistance ( e.g. block, print, dirt pick-up, flame, or thermal degradation) properties comprise aqueous nanocomposites of a water-insoluble polymer. The term "nanocomposite", as used herein, denotes the state of matter wherein polymer molecules exist among at least partially exfoliated clay layers, wherein at least one clay layer has one or more dimensions, such as length, width or thickness, in the single nanometer size range. The term "at least partially exfoliated clay", as used herein, refers to clay in which from 20 to 100% of the individual layers have been completely or partially separated, e.g. pulled apart by at least 5 nanometers, from one another.

In a specific embodiment of the present invention, waterborne coatings are provided for plastic substrates which comprise mixtures of from 5 to 65 wt%, based on total polymer solids, of one or more than one aqueous nanocomposite composition of water-insoluble adhesion promoting polymer chosen from CPO, modified isotactic polypropylene (MPP), MPP copolymer and mixtures thereof, and from 35 to 95 wt%, based on total polymer solids, of one or more than one aqueous dispersion or emulsion of coating or film-forming polymer, such as an acrylic resin having a glass transition temperature (Tg) of 10°C or more.

All ranges cited herein are inclusive and combinable. For example, if an ingredient may be present in amounts of 4 wt% or more, or 10 wt% or more, and may be present in amounts up to 25 wt%, then that ingredient may be present in amounts of 4 to 10 wt%, 4 to 25 wt% or 10 to 25 wt%.

As used herein, the term "acrylic" includes both acrylic and methacrylic, and combinations and mixtures thereof, and the term "acrylate" includes both acrylate and methacrylate, and combinations and mixtures thereof.

As used herein, the "glass transition temperature" or Tg of any polymer may be calculated as described by Fox in *Bull. Amer*. *Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the softening point of any polymer or resin may be experimentally measured using differential scanning calorimetry (DSC), measured as the middle of the peak corresponding to softening in the DSC curve.

As used herein, the phrase "acid number" refers to the number of mg KOH required to neutralize the alkali-reactive groups in 1 g of polymer and has the units (mg KOH/g polymer). The acid number is determined according to ASTM standard test method D 1639-90.

As used herein, the phrase "hydroxyl number" refers to the number of milligrams (mg) of KOH equivalent to the hydroxyl groups present in each gram (g) of polymer and has the units (mg KOH/g polymer).

As used herein, the term "Mn" refers to number-average molecular weight, as determined by gel permeation chromatography (GPC).

As used herein, unless otherwise indicated, the phrase "per hundred parts resin" or "phr" means the amount, by weight, of an ingredient per hundred parts, by weight, of the total amount of resin, reactant monomer, and polymer contained in a composition, including cross-linking resins.

As used herein, the term "polymer" includes polymers, copolymers and terpolymers, block copolymers and terpolymers, and mixtures thereof.

As used herein, the phrase "plastic substrate" refers to TPO, a substrate comprising at least about 50 wt% of a resin which may be a propylene homopolymer or a copolymer in which at least 60 wt% of the monomer content is propylene.

As used herein, the phrase "total solids" refers to the percentage of organic and inorganic solids, by weight, remaining after removal of volatile components, expressed as a portion of the total weight of a composition.

Unless otherwise indicated, viscosity units cited herein refer to those measured using a Brookfield viscometer.

As used herein, the phrase "wt%" stands for weight percent.

Suitable water-dispersible polymers for any use may comprise one or more than one, water-dispersible polymer useful as a coating binder, film-former, adhesive or molding resin. Such polymers or resins may be chosen from acrylic (co)polymers, including (co)polymers made from acrylic monomers with multiple unsaturation, acrylic modified alkyd, polyfunctional acrylic monomer, polyolefin, modified polyolefin, polyurethane, blocked polyisocyanate, acrylic urethane prepolymer, styrene (co)polymer, vinyl (co)polymer, such as poly(vinyl acetate) and hydrolyzed forms thereof, polyester, polyamide, poly(phenylene oxide), and mixtures and combinations thereof, for example waterborne acrylic dispersions or emulsions. For example, polymers and resins for coating and film-forming compositions may be chosen from acrylic (co)polymers, including (co)polymers made from acrylic monomer with multiple unsaturation, acrylic modified alkyd, polyolefin, polyurethane, blocked polyisocyanate, acrylic urethane prepolymer, poly(vinyl acetate) and hydrolyzed forms thereof, polyester, polyamide, poly(phenylene oxide), and mixtures and combinations thereof, for example waterborne acrylic dispersions or emulsions.

Suitable acrylic resins used to form waterborne acrylic dispersions or emulsions may be addition products which are addition polymers that are the reaction of acrylic monomers which may be selected from a large number of acrylic and methacrylic acids and esters along with suitable copolymerizable monomers. Examples of acids and esters which can be used include, but are not limited to acrylic acid, methacrylic acid, methyl methacrylate (MMA), ethyl acrylate, butyl acrylate, methyl acrylate, ethyl methacrylate, butyl methacrylate, such as n-butyl methacrylate (nBMA), 2-hydroxy ethyl acrylate, 2- hydroxyethyl methacrylate, propyl methacrylate, lauryl methacrylate, 2-hydroxy propyl methacrylate, 2-ethyl hexyl methacrylate, hexyl methacrylate, cyclohexyl methacrylate, ethoxyethyl acrylate, cyclohexyl acrylate, hexyl acrylate, and 2-hydroxy propyl acrylate. Suitable co-polymerizable monomers may include styrene, alpha.-methyl styrene, vinyl toluene, vinyl pyrrolidine, acrylonitrile, butadiene, and isoprene. Other functional groups provided by selection of appropriate monomer content may also provide basis for cross-linking or curing the acrylic resin, if desired. For example, -OH functionality, as provided by hydroxy ethyl acrylate or methacrylate, may be cross-linked with water dispersed polyisocyanates, and melamine formaldehydes. In addition, unsaturated carboxylic acid comonomers, e.g. (meth) acrylic acid, may provide a means by which the acrylic resin may be cross-linked by addition of a suitable cross-linking agent, such as salts of multivalent metal ions.

Exemplary polymers may comprise acid functional or hydroxyl functional acrylic polymers made from n-butyl methacrylate (n-BMA), ethyl hexyl methacrylate (EHMA), or mixtures thereof with acid functional, amine functional, glycidyl functional, hydroxyl functional comonomers, or their mixtures or combinations.

Waterborne acrylic emulsions or dispersions may be prepared by conventional means known in the art, e.g., by free- radical initiated emulsion polymerization in an aqueous medium or by solution polymerization followed by dispersion in an aqueous medium by neutralization, use of surfactants, use of thickeners or combinations thereof. Such waterborne acrylic emulsions or dispersions may be homogeneous, or may be formed by a core/shell technique or a multi-staged polymerization technique. Suitable acrylic polymers may have no functionality or may, for example, have a carboxylic acid number of 10 or more, or 50 or more, and may have acid numbers as high as 250. If present, the acid functionality may neutralized with at least one base, such as ammonia or an amine, to promote dispersibility of the acrylic polymer in aqueous media.

Regardless of the use or the water-dispersible polymer selected, compositions according to the present invention may comprise, 0 wt% or more of one or more than one water-dispersible polymer, based on total polymer solids, for example, 35 wt% or more, or 50 wt% or more, or 70 wt% or more, and may comprise up to 95 wt%, for example, up to 93 wt%, or up to 90 wt% of such polymers, based on total polymer solids. Waterborne coatings for plastic substrates may generally comprise 35 wt% or more of one or more than one water-dispersible polymer, based on total polymer solids.

Suitable water-insoluble polymers or resins may or may not be dispersible in water in the absence of layered silicate. Suitable water-insoluble polymers or resins for making aqueous nanocomposite dispersions for use in paints, sealants, thermosets, textiles, textile binders, caulks, adhesives, and plastics additives may comprise one or more than one polymer or resin chosen from those prepared via radical polymerization or condensation polymerization. Polymer or resin by radical polymerization are those prepared via radical polymerization of vinyl monomers, including (meth)acrylic monomers, styrenic monomers, vinyl carboxylate monomers, acrylonitrile, (meth)acrylamide, and mixtures thereof. Examples of polymer or resin by condensation polymerization are, but not limited to, alkyd resin, polyurethane resin, and the like. In addition, water-insoluble polymers may optionally include functional groups, such as carboxylic acid groups, hydroxyl groups, anhydride groups or amine groups that either facilitate the dispersion of the resin in water or promote the interaction of the resin with the layered mineral. While Tg need not be limited, for general coating applications Tg should be low enough, e.g. 45°C or less, that it would be a film former under either normal ambient conditions or with modest heating either as is or with the optional addition of coalescent or plasticizer.

For use in coatings or film-forming compositions for polyolefin or TPO substrates, CPO, MPP, MPP copolymers and their mixtures and combinations provide water-insoluble adhesion promoters compatible with the substrate.

Suitable CPO polymers may be chlorinated amorphous and crystalline poly-α-olefins, optionally containing carboxyl groups. CPO may comprise chlorinated propylene homopolymer or any propylene-α-olefin copolymer in which at least about 60 wt % of the monomer content is propylene. The carboxyl group containing poly-α-olefin may have a weight average molecular weight in the range of from 4,000 to 150,000, a softening point in the range of from 75° to 115°C, and an amount of chlorine in the range of from 10 to 35 wt percent, based on the weight of the polyolefin.

CPOs lacking carboxyl groups may be further modified, e.g. by grafting of an imide or with a monomer containing a carboxylic acid group or carboxylic acid anhydride group, e.g., maleic anhydride. If further modified with an imide, the imide may be present at between about 0.001 and about 10 wt % based on the weight of the polyolefin. If further modified with a monomer containing a carboxylic acid group or carboxylic acid anhydride group, the monomer may be present at between about 0.001 and about 10 wt % based on the weight of the polyolefin.

Examples of CPO may include chlorinated polyethylene or polypropylene or copolymers thereof with an α-olefin, or any of those polymers containing from 0 to 10 weight% of one or more than one unsaturated acid or anhydride, e.g. maleic anhydride, based on the weight of reactants used to make the polymer.

MPP or polypropylene-α-olefin copolymer (MPP copolymer) may be polypropylene or polypropylene-α-olefin copolymer modified, for example, by oxidation, e.g. in the presence of an oxidizing agent, such as ozone, a peroxide, a perborate or a periodate compound, or by reaction with one or more than one unsaturated reactant containing one or more than one carboxyl, anhydride, hydroxyl or epoxy group, or combinations of those groups, such as maleic acid or anhydride, in the presence of an initiator. This (co)polymer may be modified at its terminal olefin groups by reaction to form one or two terminal anhydride groups, or by reaction to form one or two terminal carboxyl, hydroxyl or epoxy groups. Terminally modified isotactic MPP or MPP copolymers give consistent dispersibility and adhesion properties in a variety of formulations and uses, and may readily be reacted with carboxyl or hydroxyl group containing acrylic polymer or resin to form an MPP or MPP copolymer-acrylic adduct that provides enhanced compatibility between an acrylic coating and a polyolefin containing substrate. Further, isotactic MPP or MPP copolymer may contain as much as 10, for example up to 5 carboxyl, anhydride, epoxy or hydroxyl groups per molecule to improve their water dispersibility.

Isotactic polypropylene (PP) or PP copolymers that may be modified to form MPP or MPP copolymers may be any such (co)polymers having a number average molecular weight (Mn) of from 500 or more, as determined by GPC, for example from 800 or more, or from 1,000 or more. Further, such suitable PP or PP copolymers should have an Mn of up to 10,000, for example, up to 7,000, or up to 4,000, or up to 2,500. The melt viscosity of such (co)polymers may range from 20-300 cP @ 149 °C. By virtue of a low melting point, isotactic MPP or MPP copolymers may provide improved wet out and penetration of coatings, primers and film forming compositions of the present invention into TPO or polyolefin containing substrates, thereby improving the adhesion of low temperature curing coatings to these substrates.

The melting point of isotactic MPP or MPP copolymers useful in the present invention may be 80°C or higher, for example 105°C or higher, and may be as high as 145°C, for example up to 120°C for MPP copolymers and may be 100°C or higher, for example, 145°C or less for MPP homopolymers. Lower melting point isotactic MPP or MPP copolymer may be selected from polymers having either or both of a lower molecular weight or a lower isotacticity. Because isotactic MPP copolymers generally have a lower melting point than corresponding isotactic MPP homopolymers, e.g. of the same molecular weight, such copolymers provide improved wet out and penetration into a substrate at low temperatures. Accordingly, lower isotacticity MPP copolymers may advantageously be used in low temperature cure applications, e.g. coatings for use on interior automotive plastics curing at 160 to 250°F (71 to 121°C), for example those curing at from 160 to 200 °F (71 to 93.3°C).

Suitable PP and PP copolymers have a narrow molecular weight distribution and a polydispersity of 1.5 to 3.0, for example 1.5 to 2.5, thereby providing coatings and films having controlled and predictable film forming and adhesion properties at predetermined temperatures, e.g. the melting point of MPP.

MPP may comprise a modified isotactic polypropylene (PP) homopolymer, such as any modified isotactic PP having from 40-90%, by weight, for example from 60-90%, by weight, of isotacticity or isotactic units, based on the total weight of monomeric units contained in the polymer, for example an olefin-terminal polypropylene. Highly isotactic PP has a definite melting point and a surprisingly narrow molecular weight distribution or low polydispersity of from 1.5 to 3.0.

MPP copolymer may comprise modified isotactic PP copolymers, such as any modified isotactic PP having up to 90 wt %, for example, up to 60 wt%, or up to 40 wt% of isotactic propylene units, based on the total weight of monomeric units contained in the copolymer, and should have 9 wt% or more, for example 40 wt% or more of such isotactic propylene units. Suitable modified isotactic PP copolymers may be random copolymers of not less than 10 weight% of propylene, based on the weight of the reactants used to make the copolymer, for example, not less than 40 weight%, with a higher α-olefin, i.e. having 3 to 12 carbon atoms, or a block copolymer of polypropylene with a poly(higher α-olefin). Examples of higher α-olefins include, butene- 1, pentene-1, octene-1, and, preferably, hexene-1. Accordingly, isotactic MPP copolymers may be exemplified by isotactic modified propylene/hexane, isotactic propylene/butene, and isotactic propylene /butene/hexene copolymers, wherein each copolymer may have one or two terminal olefin groups. Mixtures of two or more of the higher α-olefins may be copolymerized with propylene.

Regardless of the use or the water-insoluble polymer selected, compositions according to the present invention, such as aqueous coatings, may comprise 5 wt% or more, based on total polymer solids, of one or more than one water-insoluble polymer, for example, water-insoluble adhesion promoting polymer, or may comprise 7 wt% or more, or 10 wt% or more. Regardless of their use, the compositions may comprise up to 100 wt%, for example, up to 65 wt%, or up to 50 wt %, or up to 30 wt% of water-insoluble polymer, based on total polymer solids. For use in waterborne coatings for plastic substrates, one or more than one water-insoluble polymer may comprise 5 wt% or more and up to 65 wt% of the composition, based on total polymer solids.

Suitable layered silicates or clays may comprise phyllosilicates or lamellar silicates, and are typically comprised of hydrated aluminum silicates that have a platy habit and, as a crystalline structure, multiple layers comprised of combinations of layers of SiO₄ tetrahedra that are joined to layers of AlO(OH)₂ octahedra. The term "gallery", as used herein, describes the interlayer spaces of the clay. Depending upon the structure of the clay, i.e. the number of layers, the gallery may contain water and other constituents such as potassium, sodium, or calcium cations. Layered silicates vary based upon the combination of their constituent layers and cations. Isomorphic substitution of the cations of a layered silicate, such as Al³⁺ or Fe³⁺ substituting for the Si⁴⁺ ions in the tetrahedral network, or Al³⁺, Mg²⁺ or Fe²⁺ substituting for other cations in the octahedral network, typically occurs and may impart a net negative charge on the silicate structure. Naturally occurring elements within the gallery of the clays, such as water molecules or sodium or potassium cations, are attracted to the surface of the clay layers due to this net negative charge. Accordingly, suitable untreated clays will fully exfoliate and each layer thereof will disperse into water. Further, if desired, such clays may be rendered hydrophobic by cation exchange of cations in the gallery of the clay for cations having hydrophobic tails, e.g. quaternary ammonium compounds having an oleophilic group.

Both untreated and hydrophobically modified clays may be used in the compositions of the present invention. Suitable untreated clays may include any natural or synthetic layered mineral capable of being intercalated or exfoliated. Examples of suitable clays may include, but are not limited to, those known as smectite, phyllosilicate, montmorillonite, saponite, beidellite, montronite, hectorite, stevensite, vermiculite, kaolinite, hallosite and at least partially hydrophobically modified forms thereof. Readily available untreated clays include montmorillonite and smectite. Some non-limiting examples of synthetic minerals, or synthetic phyllosilicates, may include LAPONITE™, which is manufactured by Laporte Industries, Ltd. of Charlotte, N.C., magadiite, and fluorohectorite. Examples of useful modified clays may include either of CLOISITE™ 10A or 15A, from Southern Clay Products, Inc. of Gonzales, TX. An example of a useful untreated clay may include Polymer Grade Montmorillonite PGV clay, from Nanocor of Arlington, Heights, III.

Compositions may comprise sufficient amounts of aqueous nanocomposite dispersions so that they have 2 phr or more of layered silicate clay, based on the total solids content of the compositions of the present invention, for example, 3 phr or more, or 4 phr or more. The mixtures may comprise up to 10 phr, for example, up to 8 phr, or up to 6 phr of clay. Mixtures of two or more than two layered silicate clays may be used. Aqueous nanocomposite dispersions also include one or more than one water-insoluble polymer or resin. In an aqueous nanocomposite dispersion, the weight ratio of clay to water-insoluble polymer in the nanocomposite may range from 1:20 to 2:1, for example, 1:9 to 3:2 or 1:5 to 1:1. Aqueous nanocomposite dispersions, may have a solids content of from 10 to 50 wt. %, for example from 20 to 35 wt %. Accordingly, suitable amounts of aqueous nanocomposite dispersions may be at least 5 wt%, based on the total weight of the compositions, for example, at least 7 wt%, or at least 10 wt% and should be no more than 70 wt%, for example, no more than 50 wt%, or no more than 35 wt %. Mixtures of two or more than two aqueous nanocomposite dispersions may be used.

The addition of certain fillers in any thermal shock resistant composition, such as nepheline syenite, hydrotalcite, mica, wollastonite, talc, calcium metasilicate, calcium carbonate, titanium dioxide, iron oxide, zinc oxide, magnesium silicate, sintered glass, ceramic and metal oxide mixtures, calcined glass, and clays other than layered silicates which exfoliate in water, can greatly enhance the thermal shock performance of these compositions. To give a smooth film or coating, the average particle sizes of these fillers, as determined by laser light scattering, may range from 0.25µm to 250 µm, for example, 5 µm to 250 µm, for example from 10 µm to 190 µm.

The levels of suitable fillers effective to give a desirable thermal shock resistance in automotive coatings may cause marring, chalking during accelerated weathering tests, poor crock resistance, and inadequate film formation. Accordingly, fillers may be used in the amount of 0.5 phr or more, for example, 1 phr or more, 2 phr or more, 4 phr or more, 6 phr or more, 10 phr or more, 15 phr or more, 20 phr or more and should be used in amounts of 60 phr or less, for example, 50 phr or less, or 35 phr or less. However, the presence of from 2 phr or more of aqueous nanodispersed nanoclay particles, for example, 4 phr or more and up to 10 phr or less provides excellent thermal shock resistance with the use of less than 10 phr or no filler.

For use in paints, sealants, and caulks, useful fillers may include such fillers as described for automotive coatings. The one or more than one filler may be used in amounts of 0.5 phr or more, for example, 1.5 phr or more, 2.5 phr or more, or 5 phr or more, and should be used in amounts of 90 phr or less, for example, 80 phr or less, or 70 phr or less. filler average particle sizes may be those sizes specified for giving a smooth film, e.g. 0.25 µm to 250 µm.

Waterborne coating, film-forming, paint, and textile binder compositions may be used at total solids levels, including organic and inorganic solids, of from 10 to 70 wt%, for example from 30 to 70 wt%. For use in sealants, and adhesives, total solids contents may range from 30 to 80 wt%. For use in caulks, total solids contents may range from 70 to 90 wt%. For use in thermosets and plastics additives, total solids contents may range from 50 to 99 wt% for use as liquids or moist bulk materials, and may be dewatered and dried, e.g. spray dried, to 99 to 100% for use as powders, pellets or desiccated bulk materials.

Coating, paint, film-forming, adhesive, textile binder and thermoset compositions may generally contain from 0.01 to 5 phr of one or more cross-linking agents, such as those reactive with any functionality of the acrylic resin. Some acid-reactive cross-linking agents include, but are not limited to, carbodiimide, aziridine, oxazoline-functional polymer emulsion, such as that sold as EPOCROS™ K-1000 series, zinc oxide, water dispersible hydroxyl functional polyisocyanates or blocked polyisocyanates, salts of multivalent metal ions, and melamine condensate, condensate-forming resins, or epoxy resins. Some crosslinking agents that react with free hydroxyl, amine or active hydrogen groups include, but are not limited to, polyisocyanates and blocked forms thereof, epoxy resins, salts of multivalent metal ions, and melamine condensate or condensate-forming resins.

For film-forming purposes, coating and film-forming compositions for other than automotive use may contain from 0.1 to 25 phr, for example from 1 to 10 phr of one or more volatile organic components, e.g., solvents, such as alkyl ethers or alkanols and glycols, alkyl esters of aliphatic acids, aliphatic ketones, mineral spirits, turpentine, n-methyl pyrrolidinone, alkanols, and glycols, such as propylene glycol, and ethylene glycol.

For film-forming purposes, coating and film-forming compositions for automotive use may contain from 5 to 70 phr, for example from 10 to 50 phr of one or more volatile organic components. The volatile organic component evaporates from the coating composition during drying, particularly when the coating composition is baked onto the substrate. Suitable volatile organic components may comprise ester solvents, such as butyl acetate, isobutyl acetate, butyl propionate, ethyl acetate, isopropyl acetate, butyl acetate, amyl acetate, ethyl propionate and isobutylene isobutyrate; ketone solvents, such as acetone and methyl ethyl ketone; alkyl ethers, alkyl ethers of alkanols, alkyl ethers of diols, n-methyl pyrrolidinone and other C₄ to C₈ lactams, C₃ to C₈ alkanols, glycols, such as propylene glycol, and ethylene glycol, substituted glycols, such as Texanol® ester alcohol from Eastman Chemical, Co. of Kingsport, TN (2,2,4 trimethyl 1,3 pentanediol), N,N-dimethylformamide, aromatic solvent blends, mineral spirits, turpentine, toluene, xylene, naphtha, petroleum distillates; aliphatic solvents, such as heptane, octane and hexane; and mixtures thereof.

The coating, paint, sealant, caulk, textile binder and adhesive compositions may be unpigmented or may contain up to 150 phr, for example, from 10 to 120 phr, of pigment. Suitable pigments may include mixed metal oxides, metal oxides, iron oxide, calcium carbonate, aluminum and other metal flakes, organic pigments, such as quinacridones, lakes, titanium dioxide, zinc oxide, and inorganic colored pigments. Thermosets and plastics additive compositions may contain up to 400 phr, for example, from 10 to 300 phr, of such pigments.

The volatile organic component may be distinguished from plasticizers which remain with the composition as a coating on a substrate. To achieve a one-coat coating with physical properties considered acceptable for interior automotive applications, the composition may be substantially non-plasticized. By "substantially non-plasticized" is meant herein a composition containing no more than about 1 phr, and the composition preferably contains no plasticizer which remains with the coating on the substrate.

Aqueous dispersion or emulsion compositions of any kind, e.g. coatings and film-forming compositions, may also contain conventional coatings adjuvants such as, for example, tackifiers, emulsifiers, coalescing agents, plasticizers, buffers, neutralizers, thickeners or rheology modifiers, flow control agents, humectants, crosslinking agents including heat-, moisture-, light-, and other chemical- or energy- curable agents, wetting agents, biocides, antifoaming agents, colorants, waxes, defoamers, water repellants, slip or mar aids, anti- oxidants, UV-stabilizers, and the like.

Suitable emulsifiers may include, but are not limited to, those conventionally used in emulsion polymerization, such as salts of alkyl-, aryl-, aralkyl-, alkaryl-sulfates or sulfonates; alkyl-, aryl-, aralkyl-, alkaryl-poly(alkoxyalkyl) ethers; alkyl-, aryl-, aralkyl-, alkaryl- poly(alkoxyalkyl) sulfates; alkali salts of long-chain fatty acids such as potassium oleate, typically alkyl diphenyloxide disulfonate; and the like. The preferred emulsifiers may include, for example, nonionic surfactants, such as nonyl phenyl poly(ethoxyethyl) ethers, fatty ethers and esters of glycerol or polyethylene glycol, or may include dodecyl benzene sulfonate and dioctyl sulfosuccinate.

Film-forming and coating compositions may also contain at least one additional polymer, such as an additional emulsion polymer chosen from film-forming and non-film-forming emulsion polymers, including, but not limited to polymeric pigments, such as solid particles, particles having a single void, or multivoided particles. These additional polymers, if added to the coating composition of the present invention, may be present at a level of 0-200%, based on dry weight of the total dry polymer weight in the nanocomposite dispersion.

In accordance with the present invention, methods of making aqueous nanocomposite dispersions for use in waterborne coatings, paints, sealants, thermosets, textiles, textile binders, caulks, adhesives, and plastics additives, may comprise mixing unmodified layered silicate or clay, e.g. sodium montmorillonite, and water insoluble neat resin in water, optionally including one or more than one solvent, and subjecting the mixture to high shear. The clay is at least partially exfoliated given the method of the present invention or it may be exfoliated in water with stirring prior to mixing with water insoluble neat resin. Further, various orders of addition are included. For example, the polymer or resin and the layered silicate could be dispersed together in water and blended under high shear, they could be dispersed separately in water and blended under high shear, or one could be dispersed and the other could be dispersed under high shear in the already dispersed component, i.e. added as a powder.

The methods of making aqueous nanocomposite dispersions from unmodified layered silicates may use little or no VOCs, unlike solution based nanocomposite synthesis using hydrophobically modified silicates comprising modifying agents, *e.g.* dimethyl di(hydrogenated tallow) ammonium, which involves use of large amounts of VOC's. However, an organic solvent or VOC may be useful in incorporating a water-insoluble resin into an aqueous nanocomposite dispersion of an unmodified layered silicate, and should be used in amounts suitable for making a film-forming dispersion. The present methods also may avoid use of hydrophobic modifying agents that are too hydrophobic for aqueous systems and may cause loss of particle size control or latex coagulation, particularly cationic surfactants, that may destabilize polymer latex emulsions or aqueous dispersions.

By the presently inventive method, any aqueous water-insoluble polymer nanocomposite for any use may be made with unmodified layered silicate or clay. Any water insoluble resin may be used, and may be chosen from one or more than one of a water-insoluble adhesion promoting polymer, an acrylic, vinyl or styrene polymer, and mixtures thereof. Any layered silicate clay which at least partially exfoliates or swells in water may be used, including the phyllosilicates and smectites. Accordingly, the clay may be uniformly dispersed throughout the polymer or resin to promote more interfaces between clay and polymer and enhance the affinity of clay to polymer at these interfaces and, thereby, less clay material may be added to the aqueous composition of the present invention to derive the desired thermal shock resistance.

Various high shearing methods may be used to form the nanocomposite dispersion comprising one or more than one unmodified layered silicate or clay without requiring a modifying agent, such as a surfactant or emulsifier, or any volatile organic compounds. These methods include, but are not limited to, ultrasonication, sonication, grinding/milling, high speed blending, homogenization, and the like. However, an organic solvent or VOC may be useful in incorporating a water-insoluble resin into an aqueous nanocomposite dispersion of an unmodified layered silicate, and should be used in amounts suitable for making a film-forming dispersion. The aqueous dispersion may be processed via any reactor, mixer or vessel containing a disperser blade, a microfluidizer, such as, for example, a Microfluidics Model 110 T Microfluidizer manufactured by Microfluidics Inc. of Newton, Mass., any reactor or mixer containing a dissolver, such as a COWLES® blade, a sonifier such as a Branson Inc., Model 450 Sonifier, manufactured by Branson of Danbury, Conn., a homogenizer, a static mixer, a blender, such as a WARING® blender or by dewatering and wet milling, e.g in a ball mill or Brinkmann grinder followed by letdown into aqueous media.

High shearing may be continued for so long as or under such conditions as needed to form a nanocomposite dispersion. In the various embodiments of this invention, the clay may include both exfoliated clay layers and non-exfoliated clay particles, the presence of which may limit the viscosity of a nanocomposite dispersion. High shearing may be continued for a time period of 5 minutes or more, for example, 10 minutes or more, and shearing time should be 45 minutes or less, for example, 30 minutes or less. The aqueous dispersion may also be heated or may be maintained at a heated state before high shear, during high shear, or both, to temperatures which range from 10 to 150 °C, for example from 20 to 100 °C, or from 50 to 90 °C to further aid in exfoliating the clay layers.

Alternatively, methods for making waterborne coatings for automotive plastic, TPO or other resin substrates may comprise forming aqueous nanocomposite dispersions of hydrophobically modified clays or partially hydrophobically modified clays, e.g. those in which from 20 to 100% of all cations on the surface of the clay have been exchanged with hydrophobic modifying agents, by exfoliating the clay in a solvent suspension or in a water-in-solvent suspension and inverting the thus formed suspension under high shear to form an oil-in-water dispersion, and, optionally, removing solvent to form an aqueous nanocomposite dispersion. A water-insoluble adhesion promoting polymer may be mixed with the clay during exfoliation or prior to or during inversion. The aqueous nanocomposite dispersion may then be cooled, if necessary, and filtered to remove poorly dispersed materials, or it may be devolatilized to remove solvent to form an aqueous nanocomposite dispersion. Useful solvents may include aromatic and hydrocarbon solvents, such as toluene, xylene, naphtha, process oils, aniline, phenol, resorcinol and petroleum distillates; aliphatic solvents, such as heptane, cyclohexane, octane and hexane; mineral spirits and turpentine; pyrols, such as m-pyrol; aromatic solvent mixtures; water-miscible organic solvents, such as alkyl ethers, alkylene glycol alkyl ethers, alkanol alkyl ethers; C₄ to C₈ lactams, such as n-methyl pyrrolidinone; glycols such as propylene glycol, ethylene glycol, and substituted glycols, such as Texanol® ester alcohol from Eastman Chemical, Co. of Kingsport, TN (2,2,4 trimethyl 1,3 pentane diol); alkylamides, such as N,N-dimethylformamide; alkyl ketones, such as acetone and methyl ethyl ketone (MEK); alkyl esters of C₂ to C₈ aliphatic acids, such as butyl acetate, isobutyl acetate, butyl propionate, ethyl acetate, isopropyl acetate, butyl acetate, amyl acetate, ethyl propionate and isobutylene isobutyrate; and mixtures of the foregoing. Such solvents may be used in the amount of from 5 to 40 wt%, for example 5 to 15 wt%, based on the total weight of the aqueous nanocomposite dispersion.

In the alternative methods, one may use up to 7 wt%, for example, up to 5 wt%, or up to 3% and not less than 0.1 wt% of an emulsifier or a surfactant, based on the total weight of the aqueous nanocomposite dispersion, to form a nanocomposite. The use of high shear avoids use of a large quantity of emulsifier to stabilize the at least partially hydrophobically modified clay because it can degrade properties of a polymer in its final use. Suitable emulsifiers may include nonionic surfactants, such as nonyl phenyl poly(ethoxyethyl) ether, ethoxylated alcohols, and those having a hydrophile-lipophile balance (HLB) number of 10 or higher, for example 12 or higher, and up to 24, for example, up to 20 or up to 18.

The aqueous compositions of the present invention may be formed by simple mixing. Aqueous nanocomposite dispersions and water-dispersible polymer compositions may be conveniently prepared separately and mixed, or they be prepared together. For example, the compositions may be prepared merely by mixing all components together, including one or more than one of each of an aqueous nanocomposite dispersion and an aqueous dispersion or emulsion of a water-dispersible polymer, as well as any additives, such as a pigment dispersion.

Water-dispersible polymer compositions for coating, film-forming and textile binders may be prepared by techniques that are known in the coatings art. Optionally, at least one pigment is dispersed within an aqueous medium under high shear such as is afforded by a Microfluidics homogenizer, Kenics static mixer, COWLES™ mixer or, alternatively at least one predispersed pigment may be used. Then, the aqueous nanocomposite dispersion may be added under low shear stirring along with other coatings adjuvants, as desired. Alternatively, the aqueous nanocomposite dispersion may be included in the pigment dispersion step.

Coating compositions may applied by conventional application methods such as, for example, brushing and spraying methods such as, for example, roll coating, doctor-blade application, printing methods, air-atomized spray, air-assisted spray, airless spray, high volume low pressure spray, air-assisted airless spray, air knife coating, trailing blade coating, curtain coating, and extrusion. For example, coating compositions may be applied to a plastic, TPO or resinous substrate and dried and heated to from 50°C to 95°C for a time sufficient to promote adhesion to the substrate. For good adherence, the coating may be baked onto the substrate at least about 50°C, for example at 82°C for 30 minutes. If a cross-linking system is provided, significant curing takes place during the bake cycle.

The coating compositions may be useful for coating parts which are solid, non- porous, non-woven monolithic structures, for example, interior automotive parts that are plastic or TPO substrates, or may be those formed from other resins where the coating comprises a polymer or resin found in the resinous substrate. Such substrates may be formed in conventional manner, e.g., casting, molding, extrusion, etc. Interior automotive substrates may include, but are not limited to, dashboards, switches and knobs, interior moldings, upholstery and airbags. The coating compositions may be used on substrates made from resins other than propylene polymers or TPO, called "resinous substrates". For example, coatings and films that comprise, respectively, poly(vinylacetate), poly(phenylene oxide) or polyurethane as the water-dispersible resin, may be applied to a substrate comprising, respectively, at least 50 wt% of poly(vinylacetate), poly(phenylene oxide) and polyurethane, on a resin solids basis.

The coating compositions may further be used as coatings, primers and film forming compositions for exterior automotive substrates, including the body, bumpers, cladding and exterior trim, as well as under hood and underbody, as primers, basecoats, direct adhesion color coats and clear coats. In basecoats and direct adhesion color coats, the use of CPO or of isotactic MPP and MPP copolymers may provide improved hold out and soak in resistance, as well as improved metal control in metallic pigment containing coatings. Further, CPO or isotactic MPP and MPP copolymers may be used in clear coats having improved scratch and mar resistance. Preferred clear coats may include epoxy functional materials for bug and sun resistance, and generally, include polyurethanes, polyesters, acrylics and mixtures or combinations thereof for weatherability and flexibility properties.

### EXAMPLES

### PRODUCTION EXAMPLE 1 - Preparation of an Aqueous Nanocomposite Dispersion Of Modified Clay

**TABLE 1**

| **Formula** | **%** |
|---|---|
| Aromatic Solvent blend | 10.10 |
| Nonyl phenyl poly(ethoxyethyl) ether (Surfactant) | 6.13 |
| CPO (chipped and beaded resin) | 22.98 |
| Trimethyl tallow ammonium modified layered silicate | 2.53 |
| 2-Amino-2-methyl-1-propanol (AMP) | 1.66 |
| Deionized Water | 56.60 |
| Total | 100.00 |

Unless otherwise indicated, all percentages are by weight. All of the solvent, the CPO and the surfactant are added to a TEFLON™ coated beaker equipped with a Cowles blade. The mixture in the beaker is mixed with a disperser blade set at low rpm, the mixture is stirred and heated to from 185 to 190°F (85 to 87.78°C), and, once the mixture is heated, the heat is maintained while stirring is continued for 15 minutes. The clay is added and mixing is continued for 5 minutes. The heat is turned off, the AMP is added and mixing is continued for 5 more minutes. The speed of the disperser blade is set to maximum to shear the mixture. Over a 5 to 10 minute period while shearing, 25 parts of the deionized water is added and the resulting suspension is sheared for 5 more minutes to mix. The remaining deionized water is added with shearing over a 5 to 10 minute period while the speed of the Cowles blade is lowered to keep the mixture from splashing out of the beaker. The mixture is then cooled and filtered, and is stored as a dispersion having 31.64% solids, by weight.

### PRODUCTION EXAMPLE 2 (COMPARATIVE) - Preparation of an Aqueous Dispersion Without Clay

**TABLE 2**

| **Formula** | **%** |
|---|---|
| Aromatic solvent blend (Solvent) | 10.36 |
| Nonyl phenyl poly(ethoxyethyl)ether (Surfactant) | 6.28 |
| CPO (chipped and beaded resin) | 23.58 |
| AMP | 1.71 |
| Deionized Water | 58.07 |
| Total | 100.00 |

Unless otherwise indicated, all percentages are by weight. All of the solvent, the CPO and the surfactant are added to a TEFLON™ coated beaker equipped with a Cowles blade. The mixture in the beaker is mixed with a disperser blade set at low rpm, the mixture is stirred and heated to from 185 to 190°F (85 to 87.78°C), and, once the mixture is heated, the heat is maintained while stirring is continued for 15 minutes. The heat is turned off, the AMP is added and mixing is continued for 5 more minutes. The speed of the Cowles blade is set to maximum to shear the mixture. Over a 5 to 10 minute period while shearing, 25 parts of the deionized water is added and the resulting suspension is sheared for 5 more minutes to mix. The remaining deionized water is added with shearing over a 5 to 10 minute period while the speed of the disperser blade is lowered to keep the mixture from splashing out of the beaker. The mixture is then cooled and filtered, and is stored as a dispersion having 29.86% solids, by weight.

### EXAMPLES 1 and 2 - Preparation of an Aqueous Coating Composition Comprising an Aqueous Nanocomposite Dispersion of a Modified Clay (Example 1) and Preparation of an Aqueous Coating Composition without Clay (Example 2)

Thermal shock resistance is evaluated via the Ford laboratory Test Method BI 107-05, which determines the resistance of a coating to adhesion loss on a plastic or TPO substrate that has been subjected to water immersion at 38+/-2°C for four (4) hours, followed by cutting an "X" into the coating, freezing for at least 3 hours at -29+/-2°C and then a wet steam blast for 30 seconds. The scores of the test denote the following:
A rating of 20 means no coating removal;
a rating of 19 means ≤ 0.5 cm² of the coating is removed;
a rating of 18 means ≤ 1.0 cm² of the coating is removed;
a rating of 17 means ≤ 1.5 cm² of the coating is removed; and
a rating of 16 means ≤ 2.0 cm² of the coating is removed.
Any rating under 19 fails. A rating of 19 or 20 passes.

**TABLE 2 -**

| **COATING FORMULATIONS AND TEST RESULTS** | | |
|---|---|---|
| **Ingredient** | **Example 1 %(wt.)** | **Example 2 %(wt.)** |
| Deionized Water | 1.12 | 4.87 |
| 50/50 (wt./wt.) m-Pyrol and Deionized Water | 11.86 | 11.82 |
| Aqueous CPO dispersion from Production Example 2 | 0.00 | 43.17 |
| Aqueous nanocomposite CPO dispersion from Production Example 1 | 47.06 | 0.00 |
| Silicone Defoamer | 0.03 | 0.03 |
| Aqueous Acrylic MMA/nBMA copolymer emulsion (Tg 63°C), non-volatiles 45 % wt. | 24.04 | 23.96 |
| 50/50 (wt./wt.) ASE (alkali swellable emulsion) thickener solution in water | 4.40 | 4.39 |
| Silica gel flattener | 1.89 | 1.88 |
| Pigment Dispersions | 9.42 | 9.39 |
| 50/50 (wt./wt.) ASE (alkali swellable emulsion) thickener solution in water | 0.00 | 0.31 |
| Ammonia (21% in water) | 0.18 | 0.18 |
| Total | **100.00** | **100.00** |
| | | |
| Nanodispersed Clay (wt. % of coating) | 1.19% | 0.00% |
| Nanodispersed Clay phr | 5.50 | 0.00 |
| **Thermal Shock Results** | 20 Pass | 16 Fail |
| Substrate | Interior Automotive Grade TPO | Interior Automotive Grade TPO |
| Bake | 30' @180F (82.2°C) | 30' @180F (82.2°C) |

In each example, all of the water, m-Pyrol and water, CPO dispersion, defoamer and acrylic emulsion were combined at once at room temperature, followed by adding thickener, gel flattener, pigment dispersions and ammonia under moderate agitation to make an aqueous acrylic coating composition. The resulting composition was sprayed in two coats on a 4" X 6" (101.6 X 152.4 mm) TPO panel and baked to give a coated TPO having a 20 µm thick coating layer. The resulting aqueous coating containing nanodispersed clay of Example 1 shows superior thermal shock resistance when coated on a TPO substrate when compared to the same coating without the nanodispersed clay Example 2.

## Claims

1. An aqueous dispersion composition comprising one or more than one of each of:
an aqueous dispersion or emulsion of a water-dispersible polymer;
an aqueous nanocomposite dispersion of a water-insoluble polymer and an at least partially exfoliated layered silicate; and,
a filler to enhance thermal shock resistance of a coating, film, or article formed from or comprising the composition.

2. A composition as claimed in claim 1, wherein said water-dispersible polymer is an adhesion promoting polymer chosen from chlorinated polyolefin (CPO), modified polypropylene (MPP), MPP copolymers, and mixtures and combinations thereof.

3. A composition as claimed in claim 1, wherein said layered silicate is chosen from untreated smectite, phyllosilicate, montmorillonite, saponite, beidellite, montronite, hectorite, stevensite, vermiculite, kaolinite and hallosite, other untreated phyllosilicates, mixtures thereof, and partially and fully hydrophobically modified forms thereof.

4. A composition as claimed in claim 1, wherein said filler is chosen from nepheline syenite, hydrotalcite, mica, wollastonite, talc, calcium metasilicate, magnesium silicate, sintered glass, ceramic and metal oxide mixtures, calcined glass, ceramic and metal oxide mixtures, clays other than layered silicates, and mixtures thereof.

5. A composition as claimed in claim 4, wherein said filler is present in the amount of from 0 to 60 phr.

6. A composition as claimed in claim 4, wherein said at least partially exfoliated layered silicate is present in the amount of from 2 to 10 phr.

7. A composition as claimed in claim 1 which is a coating or film-forming composition for use on automotive plastic, TPO or resinous substrates, wherein the combination and amounts used of the one or more than one of each of the filler and the nanodispersed nanoclay particles are effective to provide a coating composition that exhibits a 19 or greater thermal shock resistance according to Ford laboratory test method BI 107-05 when coated on TPO and baked for 15 minutes at 165°F (73.89°C).

8. A method of making an aqueous nanocomposite dispersion comprising mixing unmodified layered silicate or clay and water insoluble neat resin in water to at least partially exfoliate the clay and subjecting the mixture to high shear to form an aqueous nanocomposite dispersion.

9. A method as claimed in claim 8, further comprising mixing one or more than one of said aqueous nanocomposite dispersions with one or more than one aqueous dispersion of one or more than one water-dispersible polymer to form an aqueous composition.

10. A coated automotive plastic, TPO or resinous substrate comprising one or more than one coating made from the composition as claimed in claim 6.
